**Europäisches Patentamt**

(19) **European Patent Office**

**Office européen des brevets**

(11) Veröffentlichungsnummer: **0 082 434**
**B1**

(12) # EUROPÄISCHE PATENTSCHRIFT

(45) Veröffentlichungstag der Patentschrift:
14.05.86

(21) Anmeldenummer: **82111431.1**

(22) Anmeldetag: **09.12.82**

(51) Int. Cl.⁴: **G 03 B 27/32,** G 03 B 27/62,
G 03 G 15/00

(54) **Reprografische Kamera.**

(30) Priorität: **19.12.81 DE 3150433**

(43) Veröffentlichungstag der Anmeldung:
**29.06.83 Patentblatt 83/26**

(45) Bekanntmachung des Hinweises auf die Patenterteilung:
**14.05.86 Patentblatt 86/20**

(84) Benannte Vertragsstaaten:
**CH DE FR GB IT LI**

(56) Entgegenhaltungen:
**EP - A - 0 023 076**
**DE - A - 2 904 678**
**GB - A - 2 067 300**

**XEROX DISCLOSURE JOURNAL, Band 5, Nr. 1,**
**Januar/Februars 1980 P.H. STIEBITZ "Machine operator**
**aide", Seite 109**
**Patent Abstracts of Japan Band 3, Nr. 153, 15. Dezember**
**1979, Seiten 149E159**

(73) Patentinhaber: **EUROGRAPH Gesellschaft für**
**Photomechanik mbH, Frankfurter Strasse 27,**
**D-5900 Siegen (DE)**

(72) Erfinder: **Moser, Ulrich F., Bündinger Strasse 2,**
**D-5900 Siegen 1 (DE)**

(74) Vertreter: **Eisenführ & Speiser, Martinistrasse 24,**
**D-2800 Bremen 1 (DE)**

## Beschreibung

Die Erfindung betrifft eine reprografische Kamera mit einem Vorlagentisch, einer zur Veränderung des Abbildungsmassstabes längsverschieblichen Optik, einer ortsfesten Bildbühne und einem Spiegel zur Umlenkung des Strahlenganges vom Vorlagentisch zur Optik.

Dieser – herkömmliche – Aufbau einer reprografischen Kamera berücksichtigt auch den Wunsch, Vorlagen unterschiedlicher Grösse in einem vorbestimmten, festen Bildformat abzubilden. Je nach Grösse der Vorlage ist dabei eine Veränderung des Abbildungsmassstabes erforderlich, und diese kann allein durch Veränderung der Relativanordnung der Optik im Strahlengang zwischen der Vorlage und der Bildbühne erreicht werden. Bei der Längsverschiebung der Optik bleibt jedoch die optische Mitte auf dem Vorlagentisch einerseits und der Bildbühne andererseits nicht gleich; vielmehr verschieben sich diese optischen Mitten gegeneinander.

In der Praxis bedeutet das, dass die Mitte einer Vorlage, die grösser als eine vorhergehende ist, gegenüber der Mitte jener vorhergehenden Vorlage auf dem Vorlagentisch seitlich verschoben werden muss. Weil diese Verlagerung der optischen Mitte bei Veränderung des Abbildungsmassstabes nicht linear erfolgt, im Regelfall die notwendige Seitenverschiebung der Vorlagenmitte sogar einen Umkehrpunkt aufweist, lässt sich auf dem Vorlagentisch nicht ausreichend sicher markieren, wie eine Vorlage bestimmter Grösse auf dem Vorlagentisch angeordnet werden muss, um die Abbildungsfläche der Bildbühne in der angestrebten Weise auszufüllen. Durch die EP-A-0 023 076 ist es auf dem Gebiet der Fotokopiertechnik bekannt geworden, bei veränderlichem Abbildungsmassstab den jeweils abgebildeten Bereich der Vorlagenbühne von der Bildbühne durch die Optik zur Vorlagenbühne rückzumelden. An zwei einander benachbarten Kanten der Bildbühne sind bei der bekannten Fotokopiereinrichtung, und zwar etwa mittig zwischen den Bildbühnenecken, separate Lichtquellen angeordnet, deren Lichtemission durch die Optik hindurch zur Vorlagen-Glasplatte hin die Lage der genannten Bildbühnenkanten repräsentiert. Entlang den komplementären Kanten der Vorlagenbühne sind lichtundurchlässige Streifen mit jeweils einer Reihe diskreter, lichtdurchlässiger Öffnungen vorgesehen. Jeder der beiden Lampen lässt jeweils eine lichtdurchlässige Öffnung einer der beiden Reihen aufleuchten, und zwar jeweils denjenigen, welcher der – vom Abbildungsmassstab abhängigen – Lage der rechtwinklig abgehenden Seitenkante entspricht. Es definiert also jede Lampe die Lage der zur anderen Lampe gehörenden Seitenkante.

Diese Einrichtung ist allerdings nur bei Ausrichtung der Vorlage an der Ecke möglich, in der die beiden Seitenkanten zusammenstossen. Eine Berücksichtigung der effektiven optischen Geometrie einer reprografischen Kamera lässt diese Einrichtung nicht zu.

Der Erfindung liegt die Aufgabe zugrunde, in einer reprografischen Kamera. für jeden Abbildungsmassstab die Angabe der richtigen Vorlagenanordnung auf dem Vorlagentisch zu ermöglichen, ohne in die optische Geometrie der Repro-Kamera einzugreifen.

Diese Aufgabe wird erfindungsgemäss dadurch gelöst, dass an den vier Ecken der Bildfläche auf der Bildbühne lichtemittierende Punkte vorgesehen sind, welche die geöffnete Optik auf dem Vorlagentisch abbildet; und dass die Punkte von Durchbrechungen der Bildbühne gebildet sind, in denen Lichtleiter enden, deren andere Enden gemeinsam von einer Lichtquelle bestrahlbar sind. Demgemäss werden während der Aufnahmevorbereitungen kontinuierlich alle vier, sämtlich veränderlichen Eckpunkte der jeweils auf der Bildbühne abgebildeten Vorlagefläche abgebildet, und zwar mit Hilfe einer einzigen, die Eckpunkte der Bildbühne direkt beleuchtenden Lichtquelle.

Bei der Einstellung wird lediglich der Abbildungsmassstab durch Längsverschiebung der Optik so verändert, dass die Fläche, welche von den auf den Vorlagentisch projizierten Markierungspunkten umschrieben wird derjenigen der zu reproduzierenden Vorlage entspricht. Durch Anordnung der Vorlage zwischen den Markierungspunkten ist alsdann sichergestellt, dass die Vorlage auf der Bildfläche der Bildbühne einerseits vollständig, andererseits aber auch nicht mit überflüssigen Randzonen abgebildet wird.

Da während des Markierungs- und Einrichtungsvorganges die Optik geöffnet sein muss, ist vorzugsweise eine Zeitschaltung vorgesehen, die die Lichtquelle für einen vorbestimmten Zeitraum einschaltet, während dessen die Optik öffnet. Ist dieser Zeitraum abgelaufen, schliesst die Optik und die Lichtquelle erlischt; die Kamera ist zum Einführen des Kopiermaterials und alsdann zur Aufnahme bereit.

Die Zeichnung veranschaulicht die Erfindung schematisch an einem Ausführungsbeispiel. Darin zeigt:

Fig. 1 die Relativanordnung der hauptsächlichen Kamerabauteile einschliesslich der erfindungsgemässen Einrichtung für die Gegenprojektion der Markierungspunkte; und

Fig. 2 in perspektivischer Darstellung die Anordnung der Gegenprojektion-Markierungseinrichtung.

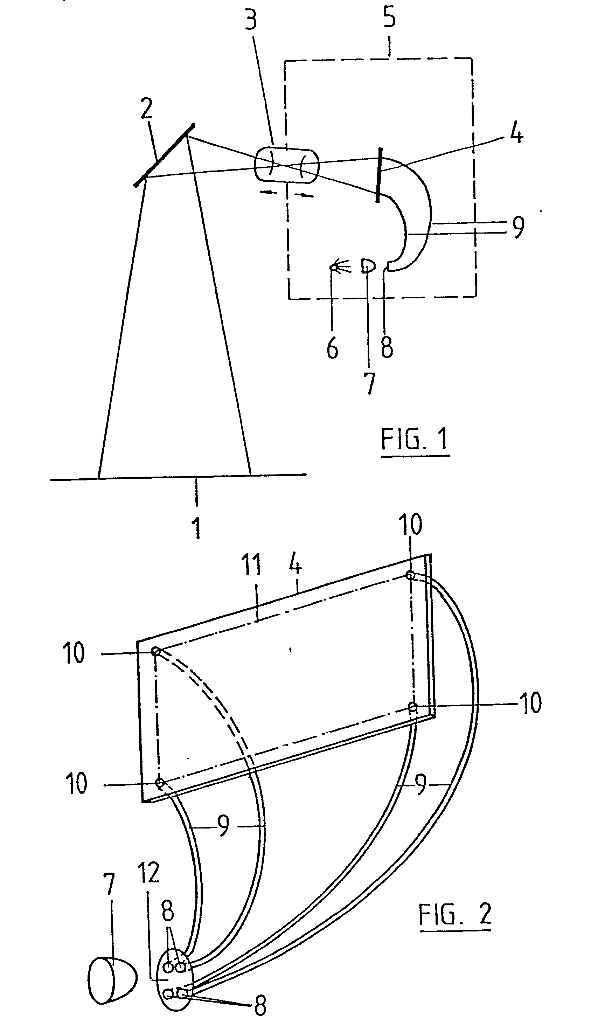

Fig. 1 veranschaulicht schematisch, wie sich oberhalb eines horizontalen Vorlagentisches 1 ein Umlenkspiegel 2 befindet, der durch die Optik 3 auf der Bildbühne 4 ein Bild des Vorlagentisches 1 (bzw. der darauf befindlichen Vorlage) entwirft. Gestrichelt ist in Fig. 1 das die Bildbühne 4 und die übrigen – nicht dargestellten – zum Dunkelteil der Kamera gehörenden Einrichtungen umschliessende Gehäuse 5 angedeutet.

Im Gehäuse 5 befindet sich auch eine Lichtquelle 6, deren Licht von einem asphärischen Kondensor 7 gebündelt auf die – zusammengefassten – Enden 8 von Lichtleitern 9 geleitet wird, deren andere Enden in Durchbrechungen 10 (Fig. 2) der Bildbühne 4 befestigt sind.

Optisch werden dadurch die Durchbrechungen 10 in der Bildbühne 4 lichtemittierende Punkte, deren Bild durch Gegenprojektion mit Hilfe der – geöffneten – Optik 3 und des Umlenkspiegels 2 auf dem Vorlagentisch 1 entworfen wird. Handelt es sich, wie Fig. 2 zeigt, bei diesen von den Durchbrechungen 10 gebildeten Punkten um die Eckpunkte der in Fig. 2 strichpunktiert angedeuteten Bildfläche 11, so markieren diese Lichtpunkte auf dem Vorlagentisch 1 bei jedem Abbildungsmassstab (Relativstellung der Optik 3) sowohl die jeweilige Grösse als auch die Lage der vollständig abzubildenden Vorlage.

Fig. 2 zeigt noch, wie die Enden 8 der Lichtleiter 9 in einer scheibenförmigen Halterung 12 befestigt sind und gemeinsam von dem durch den Kondensor 7 gebündelten Licht der Lichtquelle 6 beaufschlagt werden können. Selbstverständlich sind die anderen Enden der Lichtleiter 9 in den Durchbrechungen 10 derart befestigt, dass das Licht senkrecht zur Bildfläche 11 auf der Bildbühne 4 austritt.

## Patentansprüche

1. Reprografische Kamera mit einem Vorlagentisch (1), einer zur Veränderung des Abbildungsmassstabes längsverschieblichen Optik (3), einer ortsfesten Bildbühne (4) und einem Spiegel (2) zur Umlenkung des Strahlenganges vom Vorlagentisch (1) zur Optik (3), dadurch gekennzeichnet, dass an den vier Ecken der Bildfläche (11) auf der Bildbühne (4) lichtemittierende Punkte vorgesehen sind, welche die geöffnete Optik (3) auf dem Vorlagentisch (1) abbildet; und dass die Punkte von Durchbrechungen (10) der Bildbühne (4) gebildet sind, in denen Lichtleiter (9) enden, deren andere Enden (8) gemeinsam von einer Lichtquelle (6) bestrahlbar sind.

2. Reprografische Kamera nach Anspruch 1, dadurch gekennzeichnet, dass eine Zeitschaltung vorgesehen ist, die die Lichtquelle (6) für einen vorbestimmbaren Zeitraum einschaltet, während dessen die Optik (3) öffnet.

## Claims

1. Reprographic camera with a table (1) for the subject, an optical system (3) displaceable longitudinally for varying the scale of reproduction, a fixed image frame (4) and a mirror (2) for deflecting the path of rays from the table (1) to the optical system (3), characterised in that light-emitting points are provided at the four corners of the image surface (11) on the image frame (4), which are reproduced by the opened optical system (3) on the subject table (1); and that the points are formed by openings (10) in the image frame (4), in which terminate light conductors (9), the other ends (8) of which can be jointly irradiated by a light source (6).

2. Reprographic camera according to claim 1, characterised in that a timing circuit is provided, by which the light source (6) is switched on for a predeterminable period, during which the optical system (3) opens.

## Revendications

1. Appareil photographique de reproduction avec une table porte-original (1), un objectif (3) déplaçable en direction longitudinale pour faire varier l'échelle de reproduction, un plateau d'image (4) à position fixe et un miroir (2) pour dévier le trajet des rayons de la table porte-original (1) vers l'objectif (3), caractérisé en ce que l'on prévoit, aux quatre angles de la surface d'image (11), sur le plateau d'image (4) des points émetteurs de lumière qui sont reproduits par l'objectif ouvert (3) sur la table porte-original (1), et en ce que les points sont formés par des perçages (10) du plateau d'image (4), dans lesquels se terminent des fibres optiques (9), dont les autres extrémités (8) peuvent être exposées conjointement au rayonnement d'une source lumineuse (6).

2. Appareil photographique de reproduction selon la revendication 1, caractérisé en ce qu'il est prévu un circuit de temporisation qui met en circuit la source lumineuse (6) pendant un temps pouvant être prédéterminé, pendant lequel l'objectif (3) est ouvert.

FIG. 1

FIG. 2